(19) Europäisches Patentamt
European Patent Office
Office européen des brevets

(11) EP 2 799 600 B1

(12) **EUROPEAN PATENT SPECIFICATION**

(45) Date of publication and mention of the grant of the patent:
**21.04.2021 Bulletin 2021/16**

(21) Application number: **12862987.0**

(22) Date of filing: **25.12.2012**

(51) Int Cl.:
***D01F 6/84*** (2006.01) ***D01D 5/096*** (2006.01)
***D01F 11/08*** (2006.01) ***D06M 11/79*** (2006.01)
***D06M 15/643*** (2006.01)

(86) International application number:
**PCT/JP2012/083461**

(87) International publication number:
**WO 2013/099863 (04.07.2013 Gazette 2013/27)**

(54) **LIQUID-CRYSTALLINE POLYESTER MULTIFILAMENT**

FLÜSSIGKRISTALLINES POLYESTER-MULTIFILAMENT

MULTIFILAMENT LIQUIDE-CRISTALLIN EN POLYESTER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2011 JP 2011285996**

(43) Date of publication of application:
**05.11.2014 Bulletin 2014/45**

(73) Proprietor: **Toray Industries, Inc.**
**Tokyo 103-8666 (JP)**

(72) Inventors:
- **SAKAE, Ryosuke**
**Okazaki-shi**
**Aichi 444-8522 (JP)**
- **OGIWARA, Yoshitsugu**
**Okazaki-shi**
**Aichi 444-8522 (JP)**
- **MANABE, Takao**
**Okazaki-shi**
**Aichi 444-8522 (JP)**

(74) Representative: **Mewburn Ellis LLP**
**Aurora Building**
**Counterslip**
**Bristol BS1 6BX (GB)**

(56) References cited:
**WO-A1-2012/132851**
**JP-A- S6 245 726**
**JP-A- S6 399 328**
**JP-A- 2009 228 177**
**JP-A- 2009 235 633**
**JP-B2- H0 765 275**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 799 600 B1

## Description

### TECHNICAL FIELD

The present invention relates to a liquid crystalline polyester multifilament. Particularly, the present invention relates to a method of producing a liquid crystalline polyester multifilament with high tenacity and high elastic modulus that is suitable for industrial material applications such as ropes, fishing nets, and tension members.

### BACKGROUND ART

Liquid crystalline polyester fibers have a tenacity and an elastic modulus that are significantly higher than those of general fibers because rigid molecular chains are highly oriented in the fiber axis direction; in addition, when they are heat-treated in the form of fibers, solid phase polymerization reaction proceeds, and the increased degree of polymerization of the liquid crystalline polyester further improves their properties. In this treatment, methods in which solid phase polymerization is carried out using fibers in the form of a package have been widely used in industry in order to increase the throughput per unit time.

### PRIOR ART DOCUMENTS

### PATENT DOCUMENTS

However, in a liquid crystalline polyester multifilament, fusion between single fibers is likely to occur in a temperature range near its melting point in which solid phase polymerization reaction can proceed, and fused parts on the fiber surface are likely to be peeled apart when package is unwound, leading to defects such as fusion scars and origins of fibrillation. Further, although rigid molecular chains are highly oriented in the fiber axis direction, the interaction in a direction perpendicular to the fiber axis is weak, and consequently, fibrils can occur starting from such defects. The occurrence of defects or fibrils results in degradation of fiber physical properties, poor fiber application processability, and degradation of product quality/properties.

As a method for solving these problems, proposed are a method of producing a fiber with good untangling property, comprising applying a solution of a non-fusible polymer in an organic solvent to a fiber comprising a thermoplastic polymer, followed by stretching or heat treatment (see Patent Document 1), a method of producing an aromatic polyester fiber, comprising subjecting an aromatic polyester fiber that shows anisotropy when melted to low temperature plasma treatment under reduced pressure in the presence of a fluorine compound, followed by heat treatment (see Patent Document 2), and a method of producing an aromatic polyester fiber, comprising heat-treating an aromatic polyester fiber without a bobbin (see Patent Document 3), and the like.

Also proposed are a polyarylate fiber produced by depositing 0.03 to 5.0% by mass of inorganic fine particles on the fiber surface, the particles being mainly composed of silicic acid and magnesium with a Mohs hardness of not more than 4 and having an average particle size of 0.01 to 15 $\mu$m (see Patent Document 4), a method of producing a liquid crystalline polyester fiber, comprising solid phase polymerizing a liquid crystalline polyester fiber with an anti-fusion agent deposited thereon, and then washing a package made from the solid phase polymerized liquid crystalline polyester fiber in the form of a package to remove the anti-fusion agent, such that the amount of deposition of the anti-fusion agent on the fiber is 4.0% by weight or less based on the fiber weight (see Patent Document 5), and a liquid crystalline polyester fiber comprising a liquid crystalline polyester composed of a repeating structural unit of specific five components (see Patent Document 6), and the like.

Patent Document 1: JP 54-015020 A, Patent Document 2: JP 63-112767 A, Patent Document 3: JP 62-045743 A, Patent Document 4: JP 2004-107826 A, Patent Document 5: JP 2009-235634 A, Patent Document 6: JP 2008-240229 A.

Additional examples of liquid crystalline polyester fibers are provided in WO2012/132851, JP S63-99328, JP S62-45726, JP 2009 228177, JP H07 65275, JP H09 256240 and JP 2009 235633. Other examples of fibers are provided in JP S59-179818, JP 2008-057085 and JP 2007-126759.

However, replication of the method described in Patent Document 1 by the present inventors showed that a liquid crystalline polyester multifilament comprising 5 single fibers could not be untangled, and the fusion-inhibitory effect was insufficient. Further, assessment of fusion degree between single fibers of the aromatic polyester fiber produced in Patent Documents 2 and 3 using an entanglement tester used in the present invention showed that the fusion degree between single fibers of the aromatic polyester fiber produced in Patent Documents 2 and 3 was insufficient.

In other words, the effect of inhibiting fusion between single fibers produced by the prior art relating to fusion prevention (Patent Documents 1 to 5) is insufficient because an anti-fusion agent is only applied from one direction, for example, by means of an oiling roller and cannot be applied uniformly between single fibers inside the multifilament.

Also for Patent Document 6, it is unlikely that an anti-fusion agent can be applied uniformly between single fibers in a multifilament. Even in the cases of 10 filaments and 36 filaments described in examples, the effect of inhibiting fusion between single fibers is not sufficient, and therefore the tenacity-expressing property is poor. This problem becomes more serious when the number of filaments is larger.

Thus, the present invention aims to provide a method of producing a liquid crystalline polyester multifilament having a fusion between single fibers significantly lower than that of the prior art.

MEANS FOR SOLVING THE PROBLEMS

To solve the problems described above, the liquid crystalline polyester multifilament prepared by the method of the present disclosure has the following constitution:

A liquid crystalline polyester multifilament having a fusion degree between single fibers in the range of 0 to 20.

The method of producing the liquid crystalline polyester multifilament is specified in the appended claims and has the following constitution:

A method of producing a liquid crystalline polyester multifilament, wherein in at least one step selected from the following steps (1) and (2), and before solid phase polymerization, an anti-fusion agent is deposited on a fiber surface of a melt-spun liquid crystalline polyester multifilament from application directions different from each other by 90 to 180° in a plane perpendicular to the yarn running direction:

(1) Melt spinning step; and
(2) Rewinding step.

The liquid crystalline polyester multifilament of the present invention preferably comprises 30 to 500 single fibers.

The liquid crystalline polyester multifilament prepared according to the present invention preferably has a total fineness of 200 to 3,000 dtex.

In the liquid crystalline polyester multifilament prepared according to the present invention, the liquid crystalline polyester preferably comprises structural units (I), (II), (III), (IV), and (V) shown in the chemical formulas below.

[Chemical Formula 1]

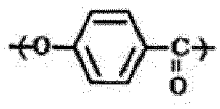
(I)

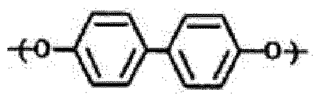
(II)

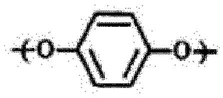
(III)

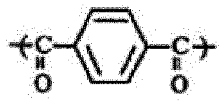
(IV)

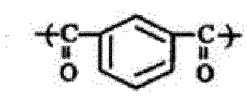
(V)

The liquid crystalline polyester multifilament prepared according to the present invention preferably comprises the structural unit (I) in an amount of 40 to 85 mol% based on the total of the structural units (I), (II), and (III); the structural unit (II) in an amount of 60 to 90 mol% based on the total of the structural units (II) and (III); and the structural unit (IV) in an amount of 40 to 95 mol% based on the total of the structural units (IV) and (V).

EFFECTS OF THE INVENTION

The liquid crystalline polyester multifilament prepared according to the present invention has an extremely low fusion degree between single fibers of 0 to 20, and therefore has improved processability in fiber application processing. Further, the liquid crystalline polyester multifilament prepared according to the present invention is a high tenacity/high

elasticity fiber with few defects due to fusion, and therefore is useful as a fiber for industrial materials.

BEST MODE FOR CARRYING OUT THE INVENTION

The present invention will now be described in detail.

The liquid crystalline polyester for use in the present invention is a polyester that exhibits optical anisotropy (liquid crystallinity) when melted by heat. This can be confirmed by placing a liquid crystalline polyester sample on a hot stage, heating the sample under a nitrogen atmosphere, and observing the light transmitted through the sample under a polarizing microscope.

Examples of the liquid crystalline polyester for use in the present invention include (a) polymerization products of aromatic oxycarboxylic acids, (b) polymerization products of aromatic dicarboxylic acids and aromatic diols or aliphatic diols, and (c) copolymerization products of (a) and (b), and in particular, polymerization products formed from aromatic compounds alone are preferred. The polymerization products formed from aromatic compounds alone exhibit high tenacity and elastic modulus when formed into a fiber. The liquid crystalline polyester may be polymerized by a conventionally known method.

Examples of aromatic oxycarboxylic acids include hydroxybenzoic acid; hydroxynaphthoic acid; and alkyl-, alkoxy-, and halogen-substituted products thereof.

Examples of aromatic dicarboxylic acids include terephthalic acid; isophthalic acid; diphenyldicarboxylic acid; naphthalene dicarboxylic acid; diphenyl ether dicarboxylic acid; diphenoxyethane dicarboxylic acid; diphenyl ethane dicarboxylic acid; and alkyl-, alkoxy-, and halogen-substituted products thereof.

Examples of aromatic diols include hydroquinone; resorcin; dihydroxybiphenyl; naphthalene diol; and alkyl-, alkoxy-, and halogen-substituted products thereof. Examples of aliphatic diols include ethylene glycol, propylene glycol, butanediol, and neopentyl glycol.

In the liquid crystalline polyester for use in the present invention, in addition to the monomers above, other monomers can be further copolymerized to the extent that the liquid crystallinity is not impaired. Examples of other monomers include aliphatic dicarboxylic acids such as adipic acid, azelaic acid, sebacic acid, and dodecanedioic acid; alicyclic dicarboxylic acids such as 1,4-cyclohexanedicarboxylic acid; polyethers such as polyethylene glycol; polysiloxanes; aromatic imino carboxylic acids; aromatic diamines; and aromatic hydroxyimines.

Preferred examples of the liquid crystalline polyester for use in the present invention formed by polymerization of the monomers above include liquid crystalline polyesters formed by copolymerization of *p*-hydroxybenzoic acid components and 6-hydroxy-2-naphthoic acid components; liquid crystalline polyesters formed by copolymerization of *p*-hydroxybenzoic acid components, 4,4'-dihydroxybiphenyl components, isophthalic acid components, and/or terephthalic acid components; and liquid crystalline polyesters formed by copolymerization of *p*-hydroxybenzoic acid components, 4,4'-dihydroxybiphenyl components, isophthalic acid components, terephthalic acid components, and hydroquinone components.

In the present invention, particularly preferred is a liquid crystalline polyester comprising structural units (I), (II), (III), (IV), and (V) shown in the chemical formulas below. "Structural unit" as used herein refers to a unit that can constitute a repeating structure in a polymer main chain.

[Chemical Formula 2]

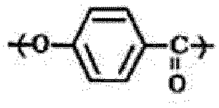 (I)

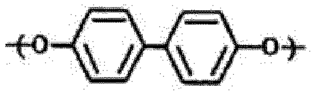 (II)

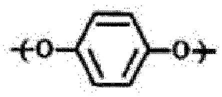 (III)

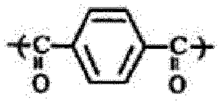 (IV)

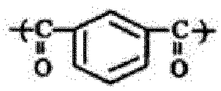 (V)

This combination provides a molecular chain with moderate crystallinity and nonlinearity, i.e., a melting point which allows for melt spinning. Accordingly, the molecular chain shows good spinnability at a spinning temperature set between the melting point and the decomposition temperature of the polymer, thereby providing a longitudinally uniform fiber, and the tenacity and elastic modulus of the fiber can be enhanced by the moderate crystallinity.

Further, in the present invention, it is important to combine components comprising a diol which are not bulky and have high linearity, such as the structural units (II) and (III). Through the combination of such components, the molecular chain in the fiber has a well-ordered structure with little disorder; in addition, the crystallinity will not increase excessively, and the interaction in a direction perpendicular to the fiber axis can be maintained. This also provides excellent abrasion resistance as well as high tenacity and elastic modulus.

The amount of the structural unit (I) described above is preferably 40 to 85 mol%, more preferably 65 to 80 mol%, and still more preferably 68 to 75 mol%, based on the total of the structural units (I), (II), and (III). Within such a range, the crystallinity can be in an appropriate range, leading to high tenacity and elastic modulus, and the melting point can be in a range which allows for melt spinning.

The amount of the structural unit (II) is preferably 60 to 90 mol%, more preferably 60 to 80 mol%, and still more preferably 65 to 75 mol%, based on the total of the structural units (II) and (III). Within such a range, the crystallinity will not increase excessively, and the interaction in a direction perpendicular to the fiber axis can be maintained, leading to improved abrasion resistance.

The amount of the structural unit (IV) is preferably 40 to 95 mol%, more preferably 50 to 90 mol%, and still more preferably 60 to 85 mol%, based on the total of the structural units (IV) and (V). Within such a range, the polymer has a melting point in an appropriate range, and shows good spinnability at a spinning temperature set between the melting point and the decomposition temperature of the polymer, thereby providing a longitudinally uniform fiber with a small single fiber fineness.

Particularly preferred ranges of the amount of the structural units in the liquid crystalline polyester for use in the present invention are as described below. By adjusting the composition within these ranges such that the requirements described above are met, the liquid crystalline polyester fiber of the present invention can be suitably obtained.

Structural unit (I): 45 to 65 mol%
Structural unit (II): 12 to 18 mol%
Structural unit (III): 3 to 10 mol%
Structural unit (IV): 5 to 20 mol%
Structural unit (V): 2 to 15 mol%

The liquid crystalline polyester for use in the present invention preferably has a weight average molecular weight (hereinafter referred to as Mw) in terms of polystyrene of 30,000 or more, more preferably 50,000 or more. When

the Mw is 30,000 or more, the polyester can have an appropriate viscosity at a spinning temperature and show improved spinnability. The higher the Mw, the higher the tenacity, elongation, and elastic modulus of the resulting fiber. To provide excellent flowability, the Mw is preferably less than 250,000, more preferably less than 150,000. "Mw" as used herein is a value determined by the method described in Examples.

The melting point of the liquid crystalline polyester used in the present invention, in terms of ease of melt spinning and heat resistance, is preferably in the range of 200 to 380°C, more preferably 250 to 350°C, and still more preferably 290 to 340°C. The melting point was determined as follows: using differential calorimetry with a differential scanning calorimeter (DSC manufactured by PerkinElmer Japan Co., Ltd.), the temperature was raised from 50°C at 20°C/min; an endothermic peak temperature ($T_{m1}$) in this process was observed; the temperature was maintained at about $T_{m1}$ + 20°C for 5 minutes and then cooled to 50°C at a cooling rate of 20°C/min; the temperature was raised again at 20°C/min: and an endothermic peak temperature ($T_{m2}$) observed in this process was used as a melting point.

Further, in the liquid crystalline polyester for use in the present invention, other polymers may be added or used in combination to the extent that the effects of the present invention are not impaired. Adding or using in combination means that polymers are mixed and that other polymers are partially used in combination or entirely used as one component or several components in bi- or multi-component spinning. Examples of other polymers that can be added include polyesters; vinyl polymers such as polyolefins and polystyrene; and polymers such as polycarbonate, polyamide, polyimide, polyphenylene sulfide, polyphenylene oxide, polysulfone, aromatic polyketone, aliphatic polyketone, semi-aromatic polyester amide, polyether ether ketone, and fluororesin. Preferred examples include polyphenylene sulfide, polyether ether ketone, nylon 6, nylon 66, nylon 46, nylon 6T, nylon 9T, polyethylene terephthalate, polypropylene terephthalate, polybutylene terephthalate, polyethylene naphthalate, polycyclohexanedimethanol terephthalate, and polyester 99M. When these polymers are added or used in combination, their melting points are preferably within the range of the melting point of the liquid crystalline polyester ± 30°C in order not to reduce the spinnability. To improve the tenacity and elastic modulus of the resulting fiber, the amount of addition or use in combination is preferably 50% by weight or less, more preferably 5% by weight or less, and most preferably, other polymers are substantially not added or used in combination.

The liquid crystalline polyester for use in the present invention may contain a small amount of various metal oxides, inorganic matter such as kaolin and silica, and additives such as coloring agents, delusterants, flame retardants, antioxidants, UV absorbers, infrared absorbers, crystal nucleating agents, fluorescent brightening agents, end-capping agents, and compatibilizers to the extent that the effects of the present invention are not impaired.

The liquid crystalline polyester multifilament may be produced by any known method. The liquid crystalline polyester multifilament has high tenacity, high elastic modulus, low water-absorbing property, and few defects and fibrils, and therefore has excellent processability in fiber application processing.

In melt spinning, known methods can be used to melt-extrude a liquid crystalline polyester, but it is preferable to use an extruder-type extruding machine to destroy an ordered structure formed by polymerization. The extruded polymer goes through a pipe, is weighed with a known weighing device such as a gear pump, passes through a filter for foreign matter removal, and then is guided to a spinneret. Here, the temperature from the polymer pipe to the spinneret (spinning temperature) is preferably not lower than the melting point and not higher than the decomposition temperature of the liquid crystalline polyester, more preferably from the melting point of the liquid crystalline polyester + 10°C to 400°C, and still more preferably from the melting point of the liquid crystalline polyester + 20°C to 370°C. It is also possible to control the temperature from the polymer pipe to the spinneret each individually. In this case, ejection is stabilized by controlling the temperature of an area near the spinneret to be higher than the upstream temperature.

To produce the liquid crystalline polyester fiber according to the present invention, it is preferable to improve the stability during ejection and the stability of thinning behavior. In industrial melt spinning, numbers of spinneret holes are drilled through one spinneret in order to reduce energy cost and improve productivity, and therefore it is preferable to stabilize the ejection and thinning through each hole.

To achieve this, it is preferred that the hole diameter of the spinneret holes be small and that the land length (length of a section of straight pipe which has the same diameter as the hole diameter of the spinneret hole) be long. From the standpoint of effectively preventing clogging of the holes, the hole diameter is preferably 0.03 mm to 1.00 mm, more preferably 0.05 mm to 0.8 mm, and still more preferably 0.08 mm to 0.60 mm. From the standpoint of effectively preventing increase of pressure loss, L/D, defined as a quotient obtained by dividing a land length L by a hole diameter D, is preferably 0.5 to 3.0, more preferably 0.8 to 2.5, and still more preferably 1.0 to 2.0. Further, to improve multifilament productivity, the number of holes per spinneret is preferably 2 to 1,000, more preferably 10 to 700, and still more preferably 30 to 500. An introduction hole located immediately above the spinneret holes is preferably a straight hole with a diameter five times or more the spinneret hole diameter in order not to increase pressure loss. A connecting portion between the introduction hole and the spinneret holes preferably tapers in order to prevent abnormal retention, and the length of the tapering portion is preferably not more than twice the land length in order not to increase pressure loss and to stabilize the flow.

The polymer ejected through the spinneret holes is passed through a heat-retaining zone and a cooling zone

to be solidified, and then taken up with a roller (godet roller) that rotates at a constant speed. An excessively long heat-retaining zone deteriorates the spinnability, and therefore the length of the heat-retaining zone is preferably up to 400 mm from the spinneret face, more preferably up to 300 mm, and still more preferably up to 200 mm. The atmosphere temperature in the heat-retaining zone can be increased using heating means, and its temperature range is preferably 100°C to 500°C, more preferably 200°C to 400°C. The cooling can be carried out using inert gas, air, water vapor, or the like, and it is preferable to use parallel or circular airflow in order to reduce the environmental load.

To improve productivity, the take-up speed is preferably 50 m/min or higher, more preferably 300 m/min or higher, and still more preferably 500 m/min or higher. The liquid crystalline polyester for use in the present invention shows good spinnability at a spinning temperature, and therefore the take-up speed can be increased. The upper limit is not particularly limited, and in the liquid crystalline polyester for use in the present invention, it is about 3,000 m/min in view of spinnability.

A spinning draft defined as a quotient obtained by dividing a take-up speed by an ejection linear speed is preferably 1 to 500, more preferably 5 to 200, and still more preferably 12 to 100. The liquid crystalline polyester for use in the present invention has good spinnability, and therefore the draft can be increased, which is advantageous for improving productivity.

In the present invention, from the standpoint of improving the spinnability and productivity, the polymer ejection rate is preferably set at 10 to 2,000 g/min, more preferably set at 30 to 1,000 g/min, and still more preferably set at 50 to 500 g/min, in order to achieve the spinning draft in the above-described range. When it is set at 10 to 2,000 g/min, a liquid crystalline polyester can be produced with good spinnability.

For winding, a known winding machine can be used to form a package in the form of cheese, pirn, cone, and the like, and cheese winding is preferred because a winding amount can be set high. In the winding, various oils may be used by means of an oiling roller (hereinafter referred to as OR) in order to reduce the frictional resistance to a guide or a roller.

The liquid crystalline polyester fiber thus produced is solid phase polymerized in order to further improve the tenacity and elastic modulus. The solid phase polymerization can be carried out in the form of a package, a hank, or a tow (carried out, for example, on a wire net), or in the form of a yarn continuously between rollers, but it is preferably carried out in the form of a package because the equipment can be simplified and the productivity can be improved.

When the solid phase polymerization is carried out in the form of a package, a technique is required which prevents fusion between single fibers which becomes marked because of being a multifilament.

What is important and most characteristic in producing the liquid crystalline polyester multifilament of the present invention having a fusion degree between single fibers of 0 to 20 is to deposit an anti-fusion agent uniformly on the surface of single fibers before solid phase polymerization. Accordingly, in the method of producing the liquid crystalline polyester multifilament of the present invention, in at least one step of a melt spinning step or a rewinding step, and before solid phase polymerization, an anti-fusion agent is deposited on a fiber surface of a melt-spun liquid crystalline polyester multifilament from application directions different from each other by 90 to 180° in a plane perpendicular to the yarn running direction. Here, the perpendicular plane must not necessarily be a single plane, and may be a plurality of perpendicular planes. In the case of a plurality of perpendicular planes, an anti-fusion agent is applied in multiple stages. The application direction means, when an oiling roller is used, the direction of a normal line tangent to the roller surface, and when a spray nozzle is used, the spraying direction.

The anti-fusion agent may be deposited on a melt-spun liquid crystalline polyester multifilament at any time point, but to increase the deposit efficiency, it is preferable, for example, to deposit it in small amounts in the melt spinning step from melt spinning to winding and then additionally deposit it in the rewinding step. One specific method of depositing the anti-fusion agent uniformly is, for example, a method in which in the melt spinning step, a solution obtained by dispersing the anti-fusion agent in a solvent such as water is deposited using the single-stage OR oiling method from two directions, and in the following rewinding step, the anti-fusion agent is additionally deposited using the oil bath dipping method and the single-stage OR oiling method from two directions. This method is preferred because the anti-fusion agent can be uniformly deposited on the surface of single fibers. The single-stage OR oiling method from two directions as used herein is a method in which in the melt spinning step or the rewinding step, the anti-fusion agent is deposited by bringing the both sides of a running yarn into contact with an opposed pair of ORs. The application direction in the case of the single-stage OR oiling method from two directions is 180°. The application directions in the case of the four-stage OR oiling method from eight directions mentioned below are 180° for each of the four stages, and the standard application direction in ORs at each stage may be shifted away from the standard application direction in the upper ORs by any angle, for example, 45° each, or may not be shifted.

In these methods, as long as the anti-fusion agent can be uniformly deposited on the fiber surface, there is no limitation on the number of ORs, the method of installing ORs, and the number of stages, but the number of directions in which the anti-fusion agent is deposited on the fiber surface is, as described above, preferably at least two directions, more preferably at least four directions, still more preferably at least eight directions, and most preferably at least sixteen directions. In the present invention, when an opposed pair of ORs is used, the number of directions in which the anti-fusion agent is deposited on the fiber surface is two directions. When two stages of opposed pairs of ORs are used, the number of directions in which the anti-fusion agent is deposited on the fiber surface is four directions; when four stages of opposed pairs of ORs are used, the number of directions in which the anti-fusion agent is deposited on the fiber surface is eight directions; and when eight stages of opposed pairs of ORs are used, the number of directions in which the anti-fusion agent is deposited on the fiber surface is sixteen directions. In the present invention, a single OR can be used in combination as required in addition to using an opposed pair of ORs.

By using multiple ORs to deposit the anti-fusion agent from two or more directions, the anti-fusion agent can be uniformly deposited on the single fiber surface of the multifilament, and the effect of inhibiting fusion between single fibers is fully exerted. Although there is no limitation on the upper limit of the number of directions in which the anti-fusion agent is applied to the fiber surface, when it is 32 or more directions, the effect of uniformly depositing the anti-fusion agent will be saturated. The oil bath dipping method is a method in which a yarn is rewound into a package for solid phase polymerization while being passed through an oil bath dispersedly filled with the anti-fusion agent.

The method using a spray nozzle to deposit the anti-fusion agent on the surface of single fibers is preferred because of excellently uniform deposition and the ease of handling.

A preferred solvent for dispersing a solid anti-fusion agent is water because of the ease of handling and a small environmental load. When a liquid anti-fusion agent is used, it is preferable to emulsify the anti-fusion agent in water using a nonionic, anionic, and cationic emulsifier. The anti-fusion agent used in this case, preferably, is easy to emulsify, has low reactivity, and has excellent smoothness. Further, in the solution, surfactants as used in normal oil and various additives for promoting solid phase polymerization reaction may be contained to the extent that dispersion and emulsion are not hindered.

The anti-fusion agent for use in the present invention is an agent that inhibits fusion between fibers when solid phase polymerization is performed with the agent being deposited on the surface of single fibers of a liquid crystalline polyester multifilament, and known agents can be used. However, to prevent volatilization in a high-temperature heat treatment in solid phase polymerization, those which have high heat resistance are preferred. Preferred examples thereof include inorganic particles; high heat-resistant organic matter such as fluorine compounds, aromatic polyamides, aromatic polyimides, and aromatic polyether ketones; polysiloxane compounds such as dimethyl polysiloxane, diphenyl polysiloxane, methylphenyl polysiloxane, and modifications thereof; and mixtures thereof.

"Inorganic particles" as used herein refers to known inorganic particles, and examples thereof include minerals, metal hydroxides such as magnesium hydroxide, metal oxides such as silica and alumina, carbonate compounds such as calcium carbonate and barium carbonate, sulfate compounds such as calcium sulfate and barium sulfate, and carbon black. By applying such high heat-resistant inorganic particles onto fibers, the contact area between single fibers can be reduced to avoid fusion that occurs during solid phase polymerization. Preferably, the inorganic particles are easy to handle in view of application process and readily dispersed in water from the standpoint of reduction of environmental load, and desirably, they are inactive under solid phase polymerization conditions. From such standpoints, it is preferable to use silica or silicate. In the case of silicate, phyllosilicates having a layered structure are particularly preferred. Examples of phyllosilicates include kaolinite, halloysite, serpentine, garnierite, smectites, pyrophyllite, talcum, and mica, among which talcum and mica are most preferred for use in view of availability.

The amount of deposition of the anti-fusion agent on the liquid crystalline polyester multifilament is preferably larger in order to inhibit fusion, and it is preferably 0.5% by weight or more, more preferably 1.0% by weight or more, based on 100% by weight of the yarn weight. On the other hand, to prevent sticky fibers to ease handling and to reduce residues after deposition removal to improve processability, it is preferably 50.0% by weight or less, more preferably 30.0% by weight or less, and particularly preferably 15.0% by weight or less. The amount of deposition of the anti-fusion agent on the liquid crystalline polyester multifilament refers to a value determined by the method described in Examples. Here, in measurements of the amount of deposition of the anti-fusion agent, when oil is applied in melt spinning, the amount of deposition of the oil is added. Some kind of oil applied in melt spinning also produces a fusion-inhibiting effect, and a large amount of deposition causes the same problems as those caused by the anti-fusion agent, such as poor handling. Thus, in the present invention, the amount of deposition of the anti-fusion agent is calculated as the total amount including the amount of deposition of oil and the like applied in melt spinning.

Components in a deposit can be identified by measuring washings after ultrasonic washing and/or a residue after evaporating water by drying using a method or a combination thereof selected from the following items depending on the purpose.

(i) X-ray fluorescence analysis (elemental analysis)
(ii) X-ray diffraction (powder method or orientation method)
(iii) NMR
(iv) Infrared absorption spectrum measurement
(v) Differential thermal analysis
(vi) SEM observation

What is important in the present invention is to deposit the anti-fusion agent uniformly on the surface of single fibers of the liquid crystalline polyester multifilament before solid phase polymerization, and for the winding density of a package, there is no problem if it is 0.03 g/$cm^3$ or more where the winding of the package will not collapse. In terms of production efficiency and handleability, the winding density is preferably 0.1 g/$cm^3$ or more, more preferably 0.3 g/$cm^3$ or more, and particularly preferably 0.5 g/$cm^3$ or more. Here, the winding density is a value calculated by Wf/Vf, wherein Vf is the volume occupied by the package determined from the outer dimension of the package and the dimension of a bobbin used as a core, and Wf is the weight of fibers.

In the present invention, as described above, there is no problem if the winding density is 0.03 g/$cm^3$ or more where the winding of the package will not collapse, and thus the package may be formed by any method. For example, it may be formed by winding in melt spinning, but it is more preferred that it be formed by rewinding a package wound in melt spinning because it is easy to control the amount of deposition of the anti-fusion agent. Further, since there is no problem if the winding density is 0.03 g/$cm^3$ or more, the winding tension in rewinding need only be 0.001 cN/dtex or more. To form a stable package even in low-tension winding, the shape of winding is preferably tapered-end winding with tapers at both ends.

The solid phase polymerization can be carried out in an atmosphere of inert gas such as nitrogen, in an atmosphere of oxygen-containing active gas such as air, or under reduced pressure, and it is preferably carried out under a nitrogen atmosphere in order to simplify the equipment and prevent oxidation of fibers or deposits. In this case, the atmosphere in the solid phase polymerization is preferably a low-humidity gas having a dew point of -40°C or lower.

The solid phase polymerization temperature is preferably not lower than a temperature 60°C lower than the melting point of a liquid crystalline polyester fiber subjected to solid phase polymerization. At such a high temperature at or near the melting point, the solid phase polymerization proceeds rapidly. Since the melting point of the liquid crystalline polyester fiber increases as the solid phase polymerization proceeds, the solid phase polymerization temperature can be increased to about 100°C higher than the melting point of the liquid crystalline polyester fiber subjected to solid phase polymerization. Increasing the solid phase polymerization temperature stepwise or continuously over time prevents fusion and at the same time improves the time efficiency of the solid phase polymerization, which is more preferred. The solid phase polymerization is carried out for several minutes to several tens of hours depending on the desired properties, and to produce a fiber having high tenacity and elastic modulus, the time at a peak temperature is preferably 5 hours or more, more preferably 10 hours or more. The solid phase polymerization reaction becomes saturated with time, and thus about 100 hours is enough.

A package after solid phase polymerization can be provided as a product as it is, but to improve the efficiency of product transportation, it is preferable to increase the winding density by rewinding the package after solid phase polymerization again. In the rewinding after solid phase polymerization, to prevent the collapse of the solid phase polymerized package due to unwinding, and further to prevent fibrillation from occurring when slight fusion is peeled off, it is preferable to perform what is called lateral unwinding, in which while rotating the solid phase polymerized package, a yarn is unwound in a direction perpendicular to the rotation axis (fiber-circling direction), and further, the solid phase polymerized package is preferably rotated not by free rotation but by positive drive.

Further, the liquid crystalline polyester fiber in the present invention may be provided with various finishing oils depending on the purpose.

The Mw in terms of polystyrene of the liquid crystalline polyester fiber prepared according to the present invention after solid phase polymerization is preferably 250,000 to 1,500,000. By having a Mw as high as 250,000 or more, the liquid crystalline polyester fiber has high tenacity, elongation, and elastic modulus, which improve fabric properties, in addition, has enhanced shock absorption particularly when made into a fine fiber, which prevents yarn breakage in a fiber application process, and also has improved abrasion resistance. Further, the liquid crystalline polyester fiber has high heat resistance because of an increased melting point. The higher the Mw, the more these properties improves, and thus it is preferably 300,000 or more, more preferably 350,000 or more. The upper limit of the Mw is not particularly limited, and the upper limit that can be reached in the present invention is about 1,500,000. In the present invention, the Mw was measured as follows: using a mixed solvent of pentafluorophenol/chloroform = 35/65 (weight ratio) as a solvent, a sample for GPC measurement was prepared by dissolution such that the concentration of liquid crystalline polyester was 0.04 to 0.08% by weight/volume, and this sample was measured using a GPC measurement apparatus available from Waters Corporation to determine its Mw in terms of polystyrene.

Column: Shodex K-806M; two, K-802; one
Detector: Differential refractive index detector RI (type 2414)
Temperature: 23 ± 2°C
Flow rate: 0.8 mL/min
Injection volume: 200 μL

The fusion degree between single fibers of the liquid crystalline polyester multifilament prepared according to

the present invention is 0 to 20, more preferably 0 to 10, and still more preferably 0 to 1. When the fusion degree between single fibers is 0 to 20, processability in fiber application processing of the resulting liquid crystalline polyester multifilament with high tenacity and high elasticity dramatically improves. Further, abrasion resistance of products therefrom also improves. If the fusion degree between single fibers is more than 20, fusion between single fibers deteriorates the processability in fiber application processing of the liquid crystalline polyester multifilament. "Fusion degree between single fibers" refers to a value determined by the method described in Examples.

The number of single fibers in the liquid crystalline polyester multifilament prepared according to the present invention is preferably 30 to 500, more preferably 200 to 500. When it is 30 to 500, the surface area where the anti-fusion agent is deposited increases, and the fusion-inhibiting effect is fully exerted, resulting in a liquid crystalline polyester multifilament with excellent fiber application processability. Also, a liquid crystalline polyester multifilament comprising 30 to 500 single fibers may be produced by separating or doubling a spun sample(s).

The total fineness after solid phase polymerization of the liquid crystalline polyester multifilament prepared according to the present invention is preferably 200 to 3,000 dtex, more preferably 500 to 3,000 dtex. When it is 200 to 3,000 dtex, the production efficiency is high, which is suitable for industrial material applications where extremely large amounts of yarn are used. Also, a liquid crystalline polyester multifilament having a total fineness of 200 to 3,000 dtex may be produced by separating or doubling a spun sample(s).

The single fiber fineness after solid phase polymerization of the liquid crystalline polyester multifilament prepared according to the present invention is preferably 100 dtex or less, more preferably 50 dtex or less, and still more preferably 30 dtex or less. When it is 100 dtex or less, even the interior of single fibers can be cooled uniformly after ejection, leading to stable spinnability, which results in a liquid crystalline polyester multifilament with good fluff quality. "Single fiber fineness" as used herein refers to a single fiber fineness (dtex) defined as a quotient obtained by dividing a total fineness by the number of single fibers.

The tenacity after solid phase polymerization of the liquid crystalline polyester multifilament prepared according to the present invention is preferably 10.0 cN/dtex or more, more preferably 12.0 cN/dtex or more, and still more preferably 15.0 cN/dtex or more. When the tenacity is 10.0 cN/dtex or more, the liquid crystalline polyester multifilament is suitable for industrial material applications requiring high tenacity and weight saving. The upper limit of the tenacity is not particularly limited, and the upper limit that can be reached in the present invention is about 30.0 cN/dtex. "Tenacity" as used herein refers to a tensile strength in the measurements of tenacity/elongation and elastic modulus described in Examples.

The elongation after solid phase polymerization of the liquid crystalline polyester multifilament prepared according to the present invention is 1.0% or more, preferably 2.0% or more. When the elongation is 1.0% or more, the shock absorption of fibers is enhanced, leading to excellent fiber application processability and handleability. The upper limit of the elongation is not particularly limited, and the upper limit that can be reached in the present invention is about 5.0%. "Elongation" as used herein refers to an elongation at break in the measurements of tenacity/elongation and elastic modulus described in Examples.

Further, the elastic modulus after solid phase polymerization of the liquid crystalline polyester multifilament prepared according to the present invention is preferably 600 cN/dtex or more, more preferably 700 cN/dtex or more, and still more preferably 800 cN/dtex or more. When the elastic modulus is 600 cN/dtex or more, the dimensional change due to stress is small, which is suitable for industrial material applications. The upper limit of the elastic modulus is not particularly limited, and the upper limit that can be reached in the present invention is an elastic modulus of about 1,500 cN/dtex. "Elastic modulus" as used herein refers to an initial tensile resistance in the measurements of tenacity/elongation and elastic modulus described in Examples.

The liquid crystalline polyester multifilament prepared according to the present invention can be used not only as a multifilament, but also as a monofilament, for example, by separating it. It can also be suitably used for staple fibers, cut fibers, and the like, and in addition, can be used as a fibrous structure such as fabric, knit, nonwoven fabric, and braid.

Specifically, the liquid crystalline polyester multifilament prepared according to the present invention is widely used in the fields of materials for general industry, materials for civil engineering and construction, sports applications, protective clothing, rubber reinforcing materials, electric materials (particularly as tension members), acoustic materials, general clothing, and the like. Examples of useful applications include screen gauzes, filters, ropes, nets, fishing nets, computer ribbons, base fabrics for printed boards, canvases for paper making, air bags, airships, base fabrics for domes and the like, riding suits, fishlines, various lines (for yachts, paragliders, balloons, kite string, and the like), blind cords, support cords for window screens, various cords in automobiles and airplanes, and power transmission cords for electric appliances and robots. In particular, the liquid crystalline polyester multifilament with low hygroscopicity is suitable for fishing net applications where polyethylene terephthalate fibers and the like are conventionally used.

EXAMPLES

The present invention will now be described in more detail by way of example, but the present invention not

limited thereto. The methods for measuring the physical properties described in Examples are shown below.

(1) Concentration of Anti-Fusion Agent

The weight percent of an anti-fusion agent contained in a solution obtained by dispersing the anti-fusion agent in a solvent such as water, the weight percent being based on 100% by weight of the solution, is defined as a concentration (%).

(2) The Number of Single Fibers

The number of single fibers was calculated by the method of JIS L 1013 (2010) 8.4.

(3) Total Fineness

The fineness based on corrected weight was measured by JIS L 1013 (2010) 8.3.1 A method under a predetermined load of 0.045 cN/dtex, and defined as a total fineness (dtex).

(4) Tenacity/Elongation, Elastic Modulus

Measurements were made under the constant-rate-extension conditions shown in JIS L 1013 (2010) 8.5.1 Standard Condition Test using "TENSILON" UCT-100 manufactured by Orientec Co., Ltd. at a chuck distance of 25 cm and a tensile speed of 30 cm/min. The tenacity and elongation was defined as a stress and elongation at break, and the elastic modulus was calculated from the inclination of a straight line connecting the zero point with a breaking point.

(5) The Amount of Anti-Fusion Agent Deposition

A fiber was taken up by 100 m with a sizing reel to make a hank, and its weight was measured, after which the hank was immersed in 100 ml of water and washed for 1 hr using an ultrasonic washing machine. The hank after ultrasonic washing was dried, and its weight was measured. A value obtained by dividing the difference between the weight before washing and the weight after washing by the weight before washing and multiplying the quotient by 100 was defined as the amount of deposition of the anti-fusion agent (% by weight).

(6) Fusion Degree between Single Fibers

The fusion degree between single fibers was calculated under the following conditions with an entanglement tester R-2072 available from Rothschild which is used to measure the degree of entanglement. The average untangled length L (mm) at the 30th probe trip at an initial tension (cN) of {fineness $(dtex)^{0.5}$} $\times$ 0.7, a yarn speed of 10 m/min, and a trip level (cN) of {fineness $(dtex)^{0.35}$} $\times$ 3.31 was measured, and the fusion degree between single fibers was calculated from the equation below.

$$\text{Fusion degree between single fibers} = 1{,}000\ (\text{mm})/\text{average untangled length } L\ (\text{mm})$$

(7) Processability Assessment

A liquid crystalline polyester multifilament was unwound at 500 m/min, and the number of fluffs per 10,000 m was counted. For the number of fluffs, 0/10,000 m was assessed to be excellent; 1 to 10/10,000 m to be good; 10 to 20/10,000 m to be fair; and more than 20/10,000 m to be poor

The present invention will now be described in detail by way of example.

[Example 1]

To a 5-L reaction vessel equipped with a stirring impeller and a distillation pipe, 870 parts by weight of *p*-hydroxybenzoic acid, 327 parts by weight of 4,4'-dihydroxybiphenyl, 157 parts by weight of isophthalic acid, 292 parts by weight of terephthalic acid, 89 parts by weight of hydroquinone, and 1433 parts by weight (1.08 equivalents of the phenolic hydroxyl groups) of acetic anhydride were charged. The resulting mixture was heated from room temperature

to 145°C over 30 min with stirring under a nitrogen gas atmosphere, and then allowed to react at 145°C for 2 hr. Thereafter, the temperature was raised to 330°C over 4 hr.

While maintaining the polymerization temperature at 330°C, the pressure was reduced to 1.0 mmHg (133 Pa) over 1.5 hr, and the reaction was continued for 20 min. When a predetermined torque was reached, the polycondensation was completed. Next, the pressure in the reaction vessel was increased to 1.0 kg/$cm^2$ (0.1 MPa). The polymer was ejected in the form of a strand through a spinneret provided with one circular ejection port with a diameter of 10 mm, and the strand was pelletized with a cutter.

This liquid crystalline polyester was composed of 54 mol% of the p-hydroxybenzoic acid unit, 16 mol% of the 4,4'-dihydroxybiphenyl unit, 8 mol% of the isophthalic acid unit, 15 mol% of the terephthalic acid unit, and 7 mol% of the hydroquinone unit, and had a melting point of 318°C, a melt viscosity of 16 Pa·sec, as measured using a Koka-type flow tester at a temperature of 328°C and a shear rate of 1,000/sec, and a Mw of 91,000.

This liquid crystalline polyester was vacuum-dried at 130°C for 15 hr and then melt-extruded with a single-screw extruder (heater temperature: 290 to 340°C). The polymer was fed to a spin pack while being weighed with a gear pump. The spinning temperature from the exit of the extruder to the spin pack was set at 335°C. In the spin pack, the polymer was filtered using a 15-μm metal nonwoven fabric filter, and the polymer was ejected through a spinneret having 75 holes with a hole diameter of 0.13 mm and a land length of 0.26 mm at an ejection rate of 52.5 g/min (0.6 g/min per hole).

The polymer ejected was cooled to solidify at room temperature, and using the four-stage OR oiling method from eight directions, the 75 filaments were taken up all together with a nelson roller at 1,250 m/min while depositing a solution obtained by dispersing 1% by weight of talc, an anti-fusion agent, in water. "Four-stage OR oiling method from eight directions" as used herein refers to a method in which an opposite pair of ORs is used for each stage, and an anti-fusion agent is uniformly deposited on the surface of single fibers from application directions different from each other by 180° in a plane perpendicular to the yarn running direction. The standard application direction in ORs at each stage was shifted away from the standard application direction in the upper ORs by 45° each. The spinning draft at this time is 29. The yarn taken up with a nelson roller was wound as it is via a dancer arm into a cheese shape using a blade traverse type winder. During the winding time of about 18 min, yarn breakage did not occur, indicating good spinnability.

This spun fiber package was unwound while doubling four fibers in the longitudinal direction (the direction perpendicular to the fiber-circling direction), and rewound with a winder (SSP-WV8P type precision winder manufactured by Kamitsu Seisakusho Ltd.) at a constant rate of 400 m/min. In this process, using the oil bath dipping method and the single-stage OR oiling method from two directions in combination, talc from the solution obtained by dispersing 1% by weight of talc in water was additionally deposited on the surface of single fibers. "Single-stage OR oiling method from two directions" as used herein refers to a method in which a pair of ORs is used, and an anti-fusion agent is uniformly deposited on the surface of single fibers from application directions different from each other by 180° in a plane perpendicular to the yarn running direction. In either oiling, the oil did not scatter or return, and was uniformly deposited on the surface of single fibers. A stainless-steel bobbin was used as a core for rewinding, and the tension at rewinding was set at 0.005 cN/dtex, the winding density at 0.5 g/$cm^3$, and the winding amount at 3 kg. Further, for the form of the package, tapered-end winding with a taper angle of 65° was employed.

The rewinding sample thus produced having a total fineness of 1,680 dtex and comprising 300 single fibers was subjected to solid phase polymerization under conditions where using a closed type oven, the temperature was raised from room temperature to 240°C, maintained at 240°C for 3 hr, raised to 290°C, and further maintained at 290°C for 20 hr. For the atmosphere, dehumidified nitrogen was supplied at a flow rate of 100 $m^3$/hr and discharged through an exhaust port so that the atmosphere in the oven was not pressurized.

The solid phase polymerized package thus produced was mounted on a delivery device rotatable by means of an inverter motor. The package was unwound while delivering the fibers in the transverse direction (fiber-circling direction) at 200 m/min, and wound into a product package with a winder. The package could be unwound with almost no resistance, and yarn breakage did not occur. The fiber physical properties were as shown in Table 1, and the fusion degree between single fibers was 0.9. The Mw of the fiber after solid phase polymerization was 420,000, and the measurement method was the same as in the case of liquid crystalline polyester polymer. This liquid crystalline polyester multifilament was used to perform processability assessment, and the number of fluffs was 0/10,000 m; the processability was excellent.

[Example 2]

A solid phase polymerized package was produced in the same manner as in Example 1 except that a solution obtained by dispersing 1% by weight of a fluorine compound $CF_3CF_2(CF_2CF_2)_2CH_2CH_2OPO(ONH_4)_2$ (hereinafter referred to as C8F compound) in water was used as an anti-fusion agent. The solid phase polymerized package thus produced was unwound in the same manner as in Example 1 and wound with a winder. The package could be unwound with almost no resistance, and yarn breakage did not occur. The fusion degree between single fibers was 2.1. This liquid crystalline polyester multifilament was used to perform processability assessment, and the number of fluffs was 0/10,000

m; the processability was excellent.

[Example 3]

A solid phase polymerized package was produced in the same manner as in Example 1 except that a solution obtained by dispersing 1% by weight of polydimethylsiloxane (SH200-350cs available from Dow Corning Toray Co., Ltd., viscosity; 350 cSt) in water was used as an anti-fusion agent. The solid phase polymerized package thus produced was unwound in the same manner as in Example 1 and wound with a winder. The package could be unwound with almost no resistance, and yarn breakage did not occur. The fusion degree between single fibers was 2.4. This liquid crystalline polyester multifilament was used to perform processability assessment, and the number of fluffs was 0/10,000 m; the processability was excellent.

[Example 4]

A solid phase polymerized package was produced in the same manner as in Example 1 except that in the spinning step and the rewinding step, a solution obtained by dispersing 3% by weight of talc, an anti-fusion agent, in water was used. The solid phase polymerized package thus produced was unwound in the same manner as in Example 1 and wound with a winder. The package could be unwound with almost no resistance, and yarn breakage did not occur. The fusion degree between single fibers was 0.6. This liquid crystalline polyester multifilament was used to perform processability assessment, and the number of fluffs was 0/10,000 m; the processability was excellent.

[Example 5]

A solid phase polymerized package was produced in the same manner as in Example 1 except that in the spinning step and the rewinding step, a solution obtained by dispersing 5% by weight of talc, an anti-fusion agent, in water was used. The solid phase polymerized package thus produced was unwound in the same manner as in Example 1 and wound with a winder. The package could be unwound with almost no resistance, and yarn breakage did not occur. The fusion degree between single fibers was 0.4. This liquid crystalline polyester multifilament was used to perform processability assessment, and the number of fluffs was 0/10,000 m; the processability was excellent.

[Example 6]

A solid phase polymerized package was produced in the same manner as in Example 5 except that the spun sample obtained in the spinning step having a total fineness of 420 dtex and comprising 75 single fibers was separated and used as a sample having a total fineness of 213 dtex and comprising 38 single fibers. The solid phase polymerized package thus produced was unwound in the same manner as in Example 1 and wound with a winder. The package could be unwound with almost no resistance, and yarn breakage did not occur. The fusion degree between single fibers was 0.2. This liquid crystalline polyester multifilament was used to perform processability assessment, and the number of fluffs was 0/10,000 m; the processability was excellent.

[Example 7]

A solid phase polymerized package was produced in the same manner as in Example 5 except that six spun samples obtained in the spinning step having a total fineness of 420 dtex and comprising 75 single fibers were doubled and used as a sample having a total fineness of 2,520 dtex and comprising 450 single fibers. The solid phase polymerized package thus produced was unwound in the same manner as in Example 1 and wound with a winder. The package could be unwound with almost no resistance, and yarn breakage did not occur. The fusion degree between single fibers was 0.5. This liquid crystalline polyester multifilament was used to perform processability assessment, and the number of fluffs was 0/10,000 m; the processability was excellent.

[Example 8]

A solid phase polymerized package was produced in the same manner as in Example 1 except that in the spinning step, only water was deposited without using talc, an anti-fusion agent, and in the rewinding step, a solution obtained by dispersing 1% by weight of talc in water was deposited using the oil bath dipping method and the single-stage OR oiling method from two directions in combination. The solid phase polymerized package thus produced was unwound in the same manner as in Example 1 and wound with a winder. The package could be unwound with almost no resistance, and yarn breakage did not occur. The fusion degree between single fibers was 4.3. This liquid crystalline

polyester multifilament was used to perform processability assessment, and the number of fluffs was 3/10,000 m; the processability was good.

[Example 9]

A solid phase polymerized package was produced in the same manner as in Example 1 except that in the spinning step, a solution obtained by dispersing 1% by weight of talc, an anti-fusion agent, in water was deposited by the four-stage OR oiling method from eight directions, and in the rewinding step, only water was deposited without using talc. The solid phase polymerized package thus produced was unwound in the same manner as in Example 1 and wound with a winder. The package could be unwound with almost no resistance, and yarn breakage did not occur. The fusion degree between single fibers was 17. This liquid crystalline polyester multifilament was used to perform processability assessment, and the number of fluffs was 9/10,000 m; the processability was good.

[Example 10]

A solid phase polymerized package was produced in the same manner as in Example 1 except that a liquid crystalline polyester resin composed of 73 mol% of the *p*-hydroxybenzoic acid unit and 27 mol% of the 6-hydroxy-2-naphthoic acid unit was used as a liquid crystalline polyester resin. The solid phase polymerized package thus produced was unwound in the same manner as in Example 1 and wound with a winder. The package could be unwound with almost no resistance, and yarn breakage did not occur. The fusion degree between single fibers was 11. This liquid crystalline polyester multifilament was used to perform processability assessment, and the number of fluffs was 0/10,000 m; the processability was excellent. On the other hand, for the physical properties after solid phase polymerization, the tenacity was 19.8 cN/dtex, and the elastic modulus was 615 cN/dtex, which were lower than those of Examples 1 to 9.

The fiber physical properties of Examples 1 to 10 were shown in Table 1 and Table 2.

[Comparative Example 1]

A solid phase polymerized package was produced in the same manner as in Example 1 except that a solution obtained by dispersing 1% by weight of talc, an anti-fusion agent, in water was deposited by the single-stage OR oiling method from one direction in the spinning step and the single-stage OR oiling method from one direction in the rewinding step. The solid phase polymerized package thus produced was unwound in the same manner as in Example 1 and wound with a winder. The package could be unwound with almost no resistance, and yarn breakage did not occur. The fiber physical properties were as shown in Table 2, and the fusion degree between single fibers was 25. This liquid crystalline polyester multifilament was used to perform processability assessment, and the number of fluffs was 12/10,000 m; the processability was fair.

[Comparative Example 2]

A solid phase polymerized package was produced in the same manner as in Example 1 except that in the spinning step, only water was deposited without using talc, an anti-fusion agent, and in the rewinding step, a solution obtained by dispersing 1% by weight of talc in water was deposited by the single-stage OR oiling method from one direction. The solid phase polymerized package thus produced was unwound in the same manner as in Example 1 and wound with a winder. Although there was slight resistance, the package could be unwound, and yarn breakage did not occur. The fusion degree between single fibers was 31. This liquid crystalline polyester multifilament was used to perform processability assessment, and the number of fluffs was 17/10,000 m; the processability was fair.

[Comparative Example 3]

A solid phase polymerized package was produced in the same manner as in Example 1 except that in the spinning step, a solution obtained by dispersing 1% by weight of talc, an anti-fusion agent, in water was deposited, by the single-stage OR oiling method from one direction, and in the rewinding step, only water was deposited without using talc. The solid phase polymerized package thus produced was unwound in the same manner as in Example 1 and wound with a winder. Although there was slight resistance, the package could be unwound, and yarn breakage did not occur. The fusion degree between single fibers was 53. This liquid crystalline polyester multifilament was used to perform processability assessment, and the number of fluffs was 29/10,000 m; the processability was poor.

[Comparative Example 4]

A solid phase polymerized package was produced in the same manner as in Example 1 except that only water was deposited without using an anti-fusion agent in the spinning step and the rewinding step. The solid phase polymerized package thus produced was attempted to be unwound in the same manner as in Example 1, but yarn breakage occurred frequently because of severe fusion. The fusion degree between single fibers was 113. This liquid crystalline polyester multifilament was used to perform processability assessment, and the number of fluffs was 145/10,000 m; the processability was poor.

[Comparative Example 5]

A solid phase polymerized package was produced in the same manner as in Example 1 except that in the spinning step, only water was deposited without using an anti-fusion agent; in the rewinding step, using the single-stage OR oiling method from one direction, a solution of poly-m-phenylene isophthalamide (1% by weight), an anti-fusion agent, in N-methyl-2-pyrrolidone proposed in Patent Document 1 was used; and the number of single fibers was 5 and the total fineness was 190 dtex. The solid phase polymerized package thus produced was attempted to be unwound in the same manner as in Example 1, but yarn breakage occurred frequently because of severe fusion. The fusion degree between single fibers was 95. This liquid crystalline polyester multifilament was used to perform processability assessment, and the number of fluffs was 118/10,000 m; the processability was poor.

[Comparative Example 6]

A solid phase polymerized package was produced in the same manner as in Example 1 except that in the spinning step and the rewinding step, an anti-fusion agent was not used; as proposed in Patent Document 2, a spun sample obtained was subjected to low temperature plasma treatment at 100 W/180 sec under reduced pressure (1 Torr) in an atmosphere containing a fluorine compound $CF_4$, and solid phase polymerization was carried out; and the number of single fibers was 100. The solid phase polymerized package thus produced was attempted to be unwound in the same manner as in Example 1, but yarn breakage occurred frequently because of severe fusion. The fusion degree between single fibers was 87. This liquid crystalline polyester multifilament was used to perform processability assessment, and the number of fluffs was 97/10,000 m; the processability was poor.

[Comparative Example 7]

A solid phase polymerized package was produced in the same manner as in Example 1 except that in the spinning step and the rewinding step, an anti-fusion agent was not used; and as proposed in Patent Document 3, a solid phase polymerization was carried out using a spun sample obtained by rewinding around a stainless-steel bobbin with the stainless-steel bobbin being removed therefrom. The solid phase polymerized package thus produced was attempted to be unwound in the same manner as in Example 1, but yarn breakage occurred frequently because of severe fusion. The fusion degree between single fibers was 102. This liquid crystalline polyester multifilament was used to perform processability assessment, and the number of fluffs was 121/10,000 m; the processability was poor.

The fiber physical properties of Comparative Examples 1 to 7 are shown in Table 3.

[Table 1]

| | | Example 1 | Example 2 | Example 3 | Example 4 | Example 5 |
|---|---|---|---|---|---|---|
| Liquid crystalline polyester resin | | *1 | *1 | *1 | *1 | *1 |
| Anti-fusion agent | | Talc | Fluorine compound (C8F compound) | Polydimethylsiloxane | Talc | Talc |
| Depositing timing of anti-fusion agent (Depositing method) | | Spinning process (four-stage OR oiling method from eight directions)+ Rewinding step (oil bath dipping method) (single-stage oiling method from two directions) | Spinning process (four-stage OR oiling method from eight directions)+ Rewinding step (oil bath dipping method) (single-stage oiling method from two directions) | Spinning process (four-stage OR oiling method from eight directions)+ Rewinding step (oil bath dipping method) (single-stage oiling method from two directions) | Spinning process (four-stage OR oiling method from eight directions)+ Rewinding step (oil bath dipping method) (single-stage oiling method from two directions) | Spinning process (four-stage OR oiling method from eight directions)+ Rewinding step (oil bath dipping method) (single-stage oiling method from two directions) |
| Application direction of anti-fusion agent | | Spinning process: 180° in each step, Rewind ing step: 180° | Spinning process: 180° in each step, Rewind ing step: 180° | Spinning process: 180° in each step, Rewind ing step: 180° | Spinning process: 180° in each step, Rewind ing step: 180° | Spinning process: 180° in each step, Rewind ing step: 180° |
| Anti-fusion agent concentration | wt% | 1 | 1 | 1 | 3 | 5 |

(continued)

| | | | Example 1 | Example 2 | Example 3 | Example 4 | Example 5 |
|---|---|---|---|---|---|---|---|
| Fiber properties | Single fiber numbers | pieces | 300 | 300 | 300 | 300 | 300 |
| | Total fineness | dtex | 1680 | 1680 | 1680 | 1680 | 1680 |
| | Tesile strength | cN/dtex | 24.8 | 24.2 | 23.9 | 25.2 | 25.5 |
| | Tesile elongation | % | 2.3 | 2.3 | 2.4 | 2.3 | 2.3 |
| | Modulus | cN/dtex | 1124 | 1112 | 1096 | 1120 | 1123 |
| | Attached amount of anti-fusion agent | wt% | 10.3 | 9.1 | 8.8 | 15.2 | 18.7 |
| | Average untagled length L | mm | 1111 | 476 | 417 | 1667 | 2500 |
| | Fusion degree between single fibers | - | 0.9 | 2.1 | 2.4 | 0.6 | 0.4 |
| | Fluff | pieces/ 10,000 m | 0 | 0 | 0 | 0 | 0 |
| | Processability | | excellent | excellent | excellent | excellent | excellent |

*1 Liquid crystalline polyester resin comprising p-hydroxy bennzoic acid units (54mol%), 4,4'-dihydroxy biphenyl units (16mol%), isophthalic acid units (8mol%), terephthalic acid units (15mol%), hydroxyquinone units (7mol%)

*2 Liquid crystalline polyester resin comprising p-hydroxy benzoic acid units (73mol%), 6-hydroxy-2-naphthoic acid units (27mol%) Note) OR: Oiling roller

[Table 2]

| | | Example 6 | Example 7 | Example 8 | Example 9 | Example 10 |
|---|---|---|---|---|---|---|
| Liquid crystalline polyester resin | | *1 | *1 | *1 | *1 | *2 |
| Anti-fusion agent | | Talc | Talc | Talc | Talc | Talc |
| Depositing timing of anti-fusion agent (Depositing method) | | Spinning process (four-stage OR oiling method from eight directions)+ Rewinding step (oil bath dipping method) (single-stage oiling method from two directions) | Spinning process (four-stage OR oiling method from eight directions)+ Rewinding step (oil bath dipping method) (single-stage oiling method from two directions) | Rewinding step only (oil bath dipping method) (single-stage oiling method from two directions) | Spinning process only (four-stage OR oiling method from eight directions) | Spinning process (four-stage OR oiling method from eight direcbons)+ Rewinding step (oil bath dipping method) (single-stage oiling method from two directions) |
| Application direction of anti-fusion agent | | Spinning process: 180° in each step, Rewinding step: 180° | Spinning process: 180° in each step, Rewinding step: 180° | Spinning process: 180° in each step, Rewinding step: 180° | Spinning process: 180° in each step, Rewinding step: 180° | Spinning process: 180° in each step, Rewinding step: 180° |
| Anti-fusion agent concentration | wt% | 5 | 5 | 1 | 1 | 1 |

(continued)

| | | | Example 6 | Example 7 | Example 8 | Example 9 | Example 10 |
|---|---|---|---|---|---|---|---|
| Fiber properties | Single fiber numbers | pieces | 38 | 450 | 300 | 300 | 300 |
| | Total fineness | dtex | 213 | 2520 | 1680 | 1680 | 1680 |
| | Tesile strength | cN/dtex | 26.5 265 | 24.4 | 24.3 | 24.1 | 19.8 |
| | Tesile elongation | % | 2.3 | 2.3 | 2.3 | 2.3 | 3.8 |
| | Modulus | cN/dtex | 1140 | 1112 | 1078 | 1084 | 615 |
| | Attached amount of anti-fusion agent | wt% | 18.3 | 19.1 | 9.5 | 6.8 | 10.7 |
| | Average untagled length L | mm | 4167 | 2193 | 233 | 59 | 91 |
| | Fusion degree between single fibers | - | 0.2 | 0.5 | 4.3 | 17 | 11 |
| | Fluff | pieces/ 10,000 m | 0 | 0 | 3 | 9 | 0 |
| | Processability | | excellent | excellent | good | good | excellent |
| *1 Liquid crystalline polyester resin comprising p-hydroxy bennzoic acid units (54mol%), 4,4'-dihydroxy biphenyl units (16mol%), isophthalic acid units (8mol%), terephthalic acid units (15mol%), hydroxyquinone units (7mol%)<br>*2 Liquid crystalline polyester resin comprising p-hydroxy benzoic acid units (73mol%), 6-hydroxy-2-naphthoic acid units (27mol%) Note) OR: Oiling roller | | | | | | | |

[Table 3]

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Liquid crystalline polyester resin | | *1 | *1 | *1 | *1 | *1 | *1 | *1 |
| Anti-fusion agent | | Talc | Talc | Talc | Absent | N-methyl-2-pyrrolidone solution of polymethaphenylene-isophthalamide (1 wt%) | Absent | Absent |
| Depositing timing of anti-fusion agent (Depositing method) | | Spinning process (single-stage oiling method from one direction)+ Rewinding step (single-stage oiling method from one direction) | Rewinding step only (single-stage oiling method from one direction) | Spinning process only (single-stage oiling method from one direction) | Absent | Rewinding step only (single-stage oiling method from one direction) | Absent | Absent |
| Application direction of anti-fusion agent | | - | - | - | - | - | - | - |
| Anti-fusion agent concentration | wt% | 1 | 1 | 1 | 0 | 1 | 0 | 0 |

(continued)

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Fiber properties | Single fiber numbers | pieces | 300 | 300 | 300 | 300 | 5 | 100 | 300 |
| | Total fineness | dtex | 1680 | 1680 | 1680 | 1680 | 190 | 1680 | 1680 |
| | Tesile strength | cN/dtex | 22.8 | 22.5 | 22.2 | 19.6 | 20.1 | 20.3 | 19.8 |
| | Tesile elongation | % | 2.4 | 2.2 | 2.5 | 2.7 | 2.6 | 2.6 | 2.7 |
| | Modulus | cN/dtex | 953 | 946 | 912 | 834 | 871 | 868 | 854 |
| | Attached amount of anti-fusion agent | wt% | 1.7 | 1.3 | 0.9 | 0.0 | 0.4 | - | - |
| | Average untagled length L | mm | 40 | 32 | 19 | 9 | 11 | 11 | 10 |
| | Fusion degree between single fibers | - | 25 | 31 | 53 | 113 | 95 | 87 | 102 |
| | Fluff | pieces/ 10,000 m | 12 | 17 | 29 | 145 | 118 | 97 | 121 |
| | Processability | | fair | fair | poor | poor | poor | poor | poor |

*1 Liquid crystalline polyester resin comprising p-hydroxy bennzoic acid units (54mol%), 4,4'-dihydroxy biphenyl units (16mol%), isophthalic acid units (8mol%), terephthalic acid units (15mol%), hydroxyquinone units (7mol%)

Note) OR:Oiling roller

As is clear from Table 1 and Table 2, by uniformly depositing an anti-fusion agent on the fiber surface using the multi-stage OR oiling method from all directions or the oil bath dipping method in the spinning step or the rewinding step, the fusion degree between single fibers can be significantly reduced to 0 to 20, and a liquid crystalline polyester multifilament with excellent processability in fiber application processing can be produced.

As is clear from Comparative Examples 1 to 3 in Table 3, it was found that when an anti-fusion agent was deposited without using the multi-stage OR oiling method from all directions or the oil bath dipping method in the spinning step or the rewinding step, the anti-fusion agent could not be uniformly deposited on the fiber surface, and the fusion degree between single fibers was as high as more than 20. As in Comparative Example 4, when an anti-fusion agent was not used, the fusion degree between single fibers was higher than 100. In Comparative Example 5, a solution of poly-m-phenylene isophthalamide (1% by weight), an anti-fusion agent, in N-methyl-2-pyrrolidone proposed in Patent Document 1 was deposited by the single-stage OR oiling method from one direction in the rewinding step, and solid phase polymerization was carried out; however, the fusion degree between single fibers was as high as 95, and it was found that the fusion-inhibitory effect was low. In Comparative Example 6, solid phase polymerization was carried out as proposed in Patent Document 2 after performing a low temperature plasma treatment under reduced pressure in an atmosphere containing a fluorine compound, but it was found that the fusion-inhibitory effect was not sufficient. Further, in Comparative Example 7, solid phase polymerization was carried out as proposed in Patent Document 3 with a stainless-steel bobbin being removed, but it was found that the fusion-inhibitory effect was not sufficient. As in these cases, when the fusion degree between single fibers is more than 20, the processability in fiber application processing is poor, which is not suitable for use in industrial materials applications where extremely large amounts of yarn are used.

INDUSTRIAL APPLICABILITY

The liquid crystalline polyester multifilament prepared according to the present invention having a fusion degree between single fibers of 0 to 20 has excellent processability in fiber application processing, and can be widely used in the fields of materials for general industry, materials for civil engineering and construction, sports applications, protective clothing, rubber reinforcing materials, electric materials (particularly as tension members), acoustic materials, general clothing, and the like because products therefrom have increased tenacity and elastic modulus. Thus, the liquid crystalline polyester multifilament prepared according to the present invention is advantageous. In particular, the liquid crystalline polyester multifilament with low hygroscopicity is suitable for fishing net applications where polyethylene terephthalate fibers and the like are conventionally used.

## Claims

1. A method of producing a liquid crystalline polyester multifilament, wherein in at least one step selected from the following steps (1) and (2), and before solid phase polymerization, an anti-fusion agent is deposited on a fiber surface of a melt-spun liquid crystalline polyester multifilament from application directions different from each other by 90 to 180° in a plane perpendicular to the yarn running direction:

   (1) Melt spinning step; and
   (2) Rewinding step.

2. A method according to claim 1 in which solid phase polymerization is carried out.

3. A method according to claim 1 or 2 wherein the liquid crystalline polyester includes (a) polymerization products of aromatic oxycarboxylic acids and / or (b) polymerization products of aromatic dicarboxylic acids and aromatic diols or aliphatic diols

## Patentansprüche

1. Verfahren zur Herstellung eines Multifilaments aus flüssigkristallinem Polyester, wobei zumindest in einem aus den nachstehenden Schritten (1) und (2) ausgewählten Schritt und vor einer Festphasenpolymerisation ein Antischmelzmittel auf der Faseroberfläche eines schmelzgesponnenen Multifilaments aus flüssigkristallinem Polyester in Anwendungsrichtungen abgeschieden wird, die sich voneinander in einer Ebene, die senkrecht auf die Garnverlaufsrichtung steht, um 90° bis 180° unterscheiden:

   (1) ein Schritt des Schmelzspinnens; und

(2) ein Schritt des erneuten Aufwickelns.

2. Verfahren nach Anspruch 1, bei dem die Festphasenpolymerisation durchgeführt wird.

3. Verfahren nach Anspruch 1 oder 2, wobei der flüssigkristalline Polyester (a) Polymerisationsprodukte von aromatischen Oxycarbonsäuren und/oder (b) Polymerisationsprodukte von aromatischen Dicarbonsäuren und aromatischen Diolen oder aliphatischen Diolen umfasst.

## Revendications

1. Procédé de production d'un multifilament en polyester cristallin liquide, dans lequel dans au moins une étape choisie parmi les étapes (1) et (2) suivantes, et avant une polymérisation en phase solide, un agent inhibiteur de fusion est déposé sur une surface de fibre d'un multifilament en polyester cristallin liquide filé à chaud à partir de directions d'application différentes les unes des autres de 90 à 180° dans un plan perpendiculaire à la direction d'avance de filament :

   (1) une étape de filage à chaud ; et
   (2) une étape de rebobinage.

2. Procédé selon la revendication 1, dans lequel une polymérisation en phase solide est effectuée.

3. Procédé selon la revendication 1 ou 2, dans lequel le polyester cristallin liquide comprend (a) des produits de polymérisation d'acides oxycarboxyliques aromatiques et/ou (b) des produits de polymérisation d'acides dicarboxyliques aromatiques et de diols aromatiques ou de diols aliphatiques.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 54015020 A
- JP 63112767 A
- JP 62045743 A
- JP 2004107826 A
- JP 2009235634 A
- JP 2008240229 A
- WO 2012132851 A
- JP S6399328 A
- JP S6245726 A
- JP 2009228177 A
- JP H0765275 B
- JP H09256240 B
- JP 2009235633 A
- JP S59179818 B
- JP 2008057085 A
- JP 2007126759 A